(19) **Europäisches Patentamt / European Patent Office / Office européen des brevets**

(11) **EP 1 818 097 A1**

(12) **EUROPEAN PATENT APPLICATION**

(43) Date of publication:
**15.08.2007 Bulletin 2007/33**

(51) Int Cl.:
*B01J 23/10* (2006.01)    *B01J 21/06* (2006.01)
*C01G 25/00* (2006.01)    *F01N 3/021* (2006.01)
*B01J 35/00* (2006.01)

(21) Application number: **07101943.4**

(22) Date of filing: **08.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **10.02.2006 JP 2006033274**

(71) Applicant: **Mazda Motor Corporation**
**Aki-gun,**
**Hiroshima 730-8670 (JP)**

(72) Inventors:
 • **Fujita, Hiroki,**
  **c/o Mazda Motor Corporation**
  **Aki-gun, Hiroshima 730-8670 (JP)**
 • **Harada, Koichiro,**
  **c/o Mazda Motor Corporation**
  **Aki-gun, Hiroshima 730-8670 (JP)**

 • **Okamoto, Kenji,**
  **c/o Mazda Motor Corporation**
  **Aki-gun, Hiroshima 730-8670 (JP)**
 • **Tsushio, Yoshinori,**
  **c/o Mazda Motor Corporation**
  **Aki-gun, Hiroshima 730-8670 (JP)**
 • **Takami, Akihide,**
  **c/o Mazda Motor Corporation**
  **Aki-gun, Hiroshima 730-8670 (JP)**
 • **Suzuki, Kenji,**
  **c/o Mazda Motor Corporation**
  **Aki-gun, Hiroshima 730-8670 (JP)**

(74) Representative: **Thoma, Michael**
  **Lorenz - Seidler - Gossel**
  **Widenmayerstrasse 23**
  **80538 München (DE)**

(54) **Catalytic material, production method therefor, and diesel particulate filter**

(57)    Disclosed is a catalytic material for removing diesel particulates, which comprises a composite oxide which contains zirconium as a primary component and a rare-earth metal except for cerium and yttrium. The composite oxide has a crystallite diameter of 13 nm to 40 nm.

EP 1 818 097 A1

**Description**

BACKGROUND OF THE INVENTION

1. Field of the Invention

The present invention relates to a catalytic material, a method for production of the catalytic material, and a diesel particulate filter. In particular, the present invention relates to a catalytic material adapted to be arranged in an exhaust passage of a diesel engine in such a manner as to pass exhaust gas therethrough to trap particulates in the exhaust gas and burningly removed the particulates by a particulate oxidation catalyst, a method for production of the catalytic material, and a diesel particulate filter.

2. Description of the Related Art

From concerns about environmental impacts of particulates emitted from diesel engines, automobiles equipped with a diesel particulate filter for trapping the particulates, in an exhaust passage thereof, is increasing. In an automobile equipped with the diesel particulate filter, it is necessary to clean off the filter by oxidizing trapped and accumulated particulates therein so as to prevent the deterioration which leads adverse effects, such as lowering in engine power or deterioration in fuel economy.

To meet the needs, there has been proposed, as disclosed in EP 1504815 A1 (PD 1), a technique of coating an inner wall surface of the filter, which defines exhaust gas flow channels, with a cerium-zirconium composite oxide having an oxygen-absorbing/releasing capability, and loading the composite oxide with a catalytic noble metal having an oxidation catalytic activity, wherein the composite oxide is adapted to release active oxygen therefrom in response to momentary switching to a rich air-fuel ratio atmosphere to allow particulates in exhaust gas to be burnt based on the active oxygen. The cerium-zirconium composite oxide has a characteristic of absorbing oxygen contained in engine exhaust gas into an oxygen-deficient site therein when the exhaust gas is leaner than a theoretical air-fuel ratio, and releasing the absorbed oxygen when the exhaust gas is richer than the theoretical air-fuel ratio.

An oxygen-ion conductive material with oxygen-ion conduction properties also has promise as a co-catalyst for oxidizing/burning particulates. The oxygen-ion conductive material has a so-called oxygen pumping function of sending oxygen to an oxygen-deficient site of a particle surface of the material from other oxygen- redundancy site. The activity of the oxygen-ion conductive material is a different function from the oxygen absorbing/releasing function of the cerium-zirconium composite oxide.

Zirconia ($ZrO_2$) is known as the oxygen-ion conductive material, and one type of diesel particulate filter which has a catalytic layer containing a zirconia powder is disclosed in the EP 1208903 A2 (PD 2). The diesel particulate filter disclosed in PD 2 comprises a co-catalyst powder consisting of zirconia particles and a transition metal layer which covers at least a part of a surface of the zirconia particles in a lamellar manner, and at least either one of a titania powder and a zeolite powder. In PD 2, there is no description about the point that particulates are burnt directly by the zirconia particles.

Comparing the cerium-zirconium composite oxide with an oxygen-absorbing/releasing function disclosed in PD 1 and the oxygen-ion conductive material disclosed in PD 2, it appears that the oxygen-ion conductive material has higher carbon burning performance is just now emerging.

However, the use of the oxygen-ion conductive material does not always contribute to increase in carbon burnup rate (speed). In the diesel particulate filter disclosed in PD 2, it is simply shown that a transition metal is incorporated in a zirconium oxide as a solid solution (see the paragraph [0052] of PD 2), and the zirconium oxide in PD 2 has only a function of a carrier body loading the transition metal.

In this connection, the applicant of this application previously disclosed a particulate oxidation catalyst comprising a zirconium-based composite oxide which contains zirconium as a primary component, and a rare-earth metal except for cerium, wherein the zirconium-based composite oxide loads the aforementioned catalytic noble metal (Japanese Patent Application Serial No. 2005-241744; hereinafter referred to as "PPA: Patent in Precedent Application". PPA is not a prior art.).

A diesel particulate filter using this particulate oxidation catalyst has an advantage of being able to burn particulates accumulated in the filter efficiently within a short period of time by not only the catalytic noble metal but also the zirconium-based composite oxide loading the catalytic noble metal.

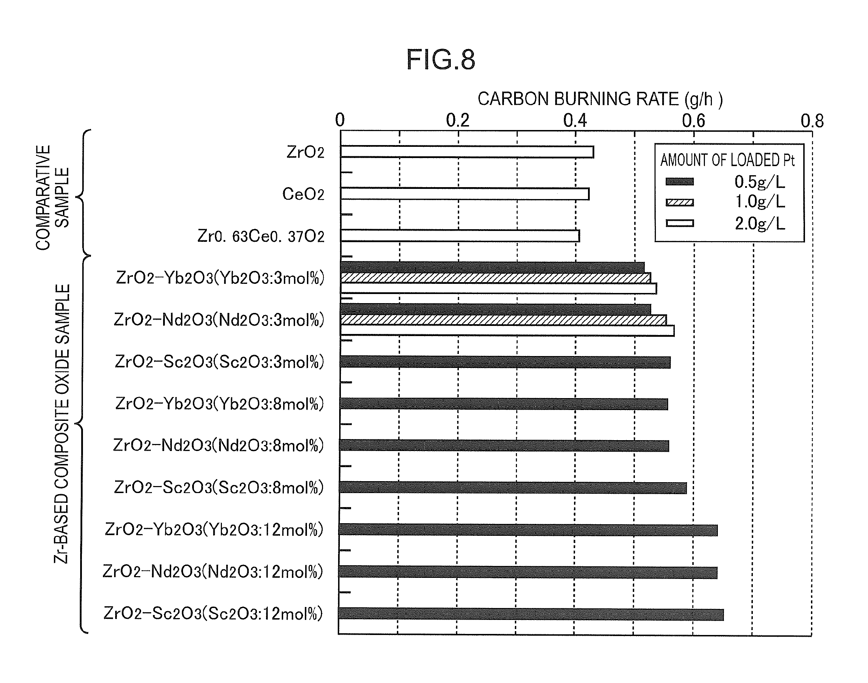

FIG. 8 is a graph in PPA which shows respective carbon burnup rates in particulate oxidation catalysts made of various types of Pt-loaded powders.

As seen in FIG. 8 of PPA, it was found that zirconium-based samples which are particulate oxidation catalysts each made of a zirconium-based composite oxide (Zr-based composite oxide samples in FIG. 8) provide a higher carbon burnup rate than that in each comparative sample (zirconium oxide, cerium oxide and cerium-zirconium composite oxide) containing a larger amount of expensive platinum. Further, no significant variation was observed in the carbon burning performance even when the number of moles of a rare-earth metal contained in each of the zirconium-based samples was changed. Based on this knowledge, a carbon burnup rate could be successfully increased at a relatively low temperature by using a catalytic material comprising a zirconium-based composite oxide as a primary component, as in PPA previously proposed by the applicant.

In PPA, the rare-earth metal is selected from rare-earth metals except for cerium, and thereby the zirconium-based composite oxide has no oxygen-absorbing/releasing capability. Thus, there are limitations in improving a light-off performance associated with a low-temperature conversion efficiency of unburned exhaust gas emissions, such as hydrocarbon and carbon monoxide, and a high-temperature conversion efficiency.

In view of the above problems, it is an object of the present invention to provide a catalytic material capable of achieving a higher carbon burnup rate than the catalyst in PPA, and enhancing both the light-off performance and high-temperature conversion performance for exhaust gas emissions, a method for production of the catalytic material, and a diesel particulate filter.

SUMMARY OF THE INVENTION

As the result of various researches on zirconium-based composite oxides containing zirconium as a primary component and a rare-earth metal except for cerium and yttrium, the inventors of this application found that a zirconium-based composite oxide having a crystallite diameter falling within a given range enhances both light-off and high-temperature conversion performances for exhaust gas emissions.

Specifically, according to a first aspect of the present invention, there is provided a catalytic material for removing diesel particulates. The catalytic material comprises a composite oxide which contains zirconium as a primary component and a rare-earth metal except for cerium and yttrium, and has a crystallite diameter of 13 nm to 40 nm.

The above catalytic material of the present invention allows particulates accumulated on catalytic material (catalytic layer) to be burnt efficiently within a short period of time. This would be achieved by the following mechanism. A zirconium-based composite oxide has oxygen-ion conduction properties. Thus, when particulates attach on a surface of the catalytic material to locally form a specific site having a relatively low oxygen concentration in the surface, oxygen ions ($O^{2-}$) are transferred from other site having a relatively high oxygen concentration to the specific site through the composite oxide, and sequentially released from the composite oxide as active oxygen. This active oxygen reacts with particulates consisting primarily of carbon to oxidize the particulates and generate a flame kernel. While the generation of the flame kernel leads to a deficiency of oxygen therearound, oxygen ions ($O^{2-}$) are sequentially transferred through the composite oxide as described above, and active oxygen is continuously is supplied to the oxygen-deficient site to allow a burning area to expand peripherally about the flame kernel. In this manner, a flame kernel generated at a certain site is maintained to expand a burning area, so that particulates can be efficiently subjected to oxidative burning even at relatively low temperatures. Thus, in a process of increasing a temperature of exhaust gas to be passed through a diesel particulate filter, by a post fuel-injection control or the like, so as to regenerate the diesel particulate filter (burning and removal of particulates), a fuel injection amount for the post fuel-injection control can be reduced while allowing the regeneration of the filter to be performed efficiently within a short period of time, to achieve enhanced fuel economy. Furthermore, in the present invention, a crystallite diameter of the composite oxide is set in a specific rage of 13 nm to 40 nm. This makes it possible to adequately maintain a balance between the transfer of oxygen ions ($O^{2-}$) and a contact area with particulates. Specifically, an oxide or composite oxide for use in a catalyst or the like generally exists in the form of a secondary particle which consists of an aggregate of a plurality of crystallites. Given that a particle diameter of this secondary particle is constant, the number of boundaries between the crystallites in contact with each other is increased as each diameter of the crystallites becomes smaller. The increase in the number of boundaries means that the oxygen ions ($O^{2-}$) have to pass through a greater number of boundaries, to cause difficulty in transferring the oxygen ions ($O^{2-}$). Therefore, if the crystallite diameter is excessively small, all of light-off and high-temperature conversion performances for exhaust gas emissions and a carbon burnup rate will deteriorate. Conversely, if the crystallite diameter is increased, the contact area with particulates will be relatively narrowed even though the number of boundaries between the crystallites in contact with each other will be reduced. Thus, an excessively large crystallite diameter also causes decrease in an amount of particulates to be removed and deterioration in particulate conversion performance. In the present invention, the reason for exclusion of cerium from the rare-earth metal of the zirconium-based composite oxide is that a cerium-zirconium composite oxide primarily acts as an oxygen absorbing/releasing material and has low oxygen-ion conductivity. Further, the reason for exclusion of yttrium is that the applicant of this application previously filed a patent application (Japanese Patent Application Serial No. 2004-83078) concerning a particulate oxidation catalyst comprising a zirconium-yttrium composite oxide ($ZrO_2$-$Y_2O_3$). Through subsequent researches, the present invention was made based on a discovery of a zirconium-based composite oxide capable of obtaining further enhanced light-off and high-temperature conversion performances for exhaust gas emissions and a higher carbon burnup rate than those in zirconium-yttrium composite oxide.

These and other objects, features and advantages of the invention will become more apparent upon reading the following detailed description along with the accompanying drawings.

BRIEF DESCRIPTION OF THE DRAWINGS

FIG. 1 is an explanatory diagram showing a diesel particulate filter with an oxidation catalyst, according to one embodiment of the present invention, wherein the diesel particulate filter is installed in an exhaust passage of a diesel engine.
FIG. 2 is a front view schematically showing the diesel particulate filter.
FIG. 3 is a vertical sectional view schematically showing the diesel particulate filter.
FIG. 4 is an enlarged sectional view showing a porous wall of the diesel particulate filter.
FIG. 5 is an explanatory diagram of a mechanism for burning of particulates.
FIG. 6 is a graph showing data on a relationship of a calcinating temperature of a coprecipitated precursor, a T50 light-off temperature, and a C300 high-temperature conversion efficiency, which has been obtained from one Example.
FIG. 7 is a graph showing a relationship between a calcinating temperature of a coprecipitated precursor and a carbon burnup rate.
FIG. 8 is a graph showing respective carbon burnup rates in particulate oxidation catalysts made of various types of Pt-loaded powders, which is disclosed in PPA (Japanese Patent Application Serial No. 2005-241744).

DETAILED DESCRIPTION OF THE PREFERRED EMBODIMENTS OF THE INVENTION

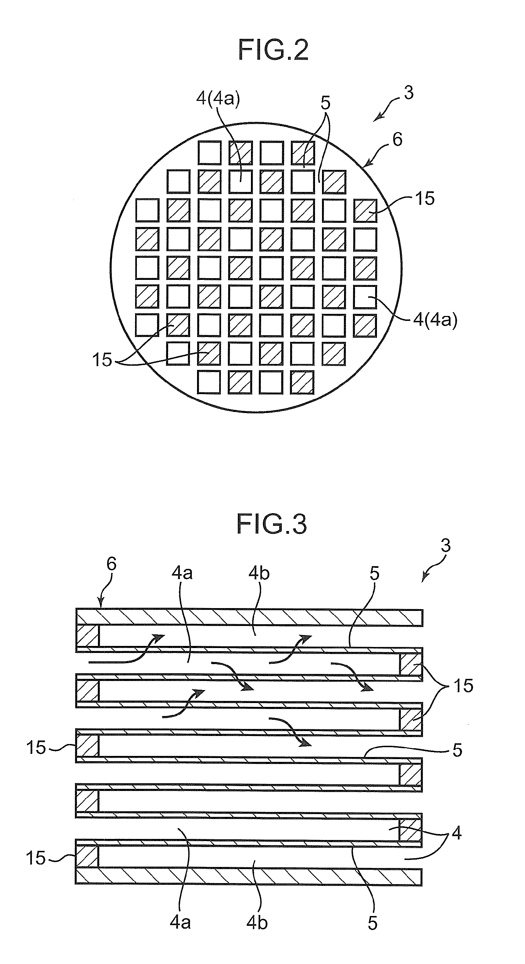

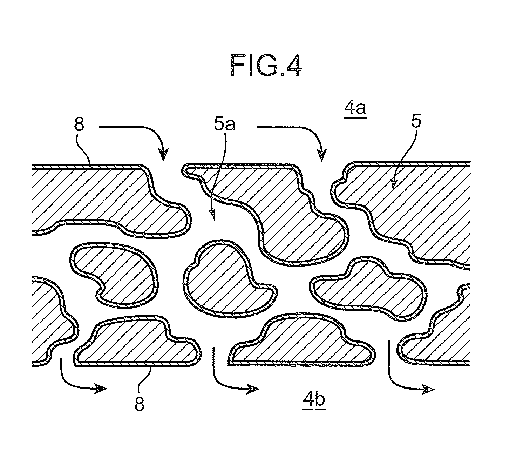

With reference to the accompanying drawings, a preferred embodiment of the present invention will now be described.

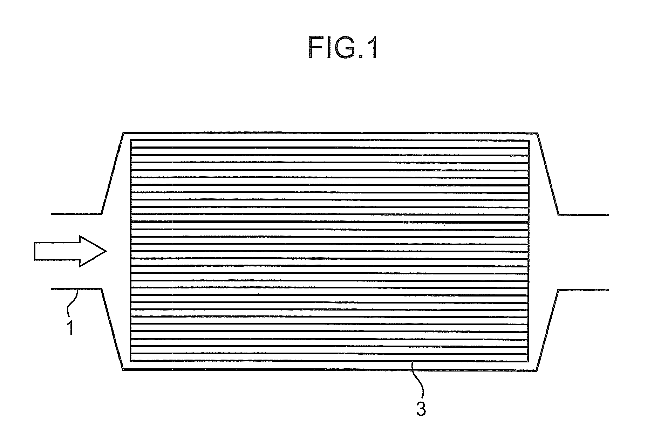

FIG. 1 shows a diesel particulate filter (DPF) 3 installed in an exhaust passage 1 of a diesel engine. In FIG. 1, an exhaust pipe defining the exhaust passage 1 is connected to a diesel engine body via an exhaust manifold (not shown). Exhaust gas discharged from the diesel engine body flows through the exhaust passage 1 in a direction from the left side to the right side of FIG. 1.
The exhaust passage 1 is provided with a DPF 3 for trapping particulates (particulate matter) in the exhaust gas. FIGS. 2 and 3 are explanatory diagrams schematically showing the DPF 3.
The DPF 3 is a so-called wall-flow type DPF formed to have a cylindrical outer shape. Specifically, the DPF 3 comprises a filter body 6 which is made of cordierite or SiC-based or $Si_3N_4$-based ceramics, and formed in a honeycomb structure having a plurality of cells 4 (passages) separated by a porous wall 5 with a great number of communication pores to extend parallel to each other along the exhaust direction, and a plugging member 15 which plugs upstream ends of a part 4b of the cells 4 and downstream ends of the remaining cells 4a in a zigzag pattern. Thus, as indicated by arrows in FIG. 3, exhaust gas flowing from upstream open ends of the upstream cells 4a into the DPF 3 is directed toward the downstream cells 4b having downstream open ends via the porous wall 5, and discharged from the DPF 3, so that particulates in the exhaust gas are trapped during this process. Instead of the DPF 3, a conventional support having a 3-dimensional meshed structure made of a heat-resistant material, such as the above ceramics or a sintered alloy may be used.
As shown in FIG. 4, an oxidation catalytic layer 8 is formed on a surface of the porous wall 5 of the DPF 3 which defines an inner flow channel for allowing exhaust gas to pass therethrough, by coating the inner wall surface with a particulate oxidation catalyst serving as a catalytic material for burning particulates. This oxidation catalytic layer 8 may be formed over the entire area of the inner flow channel, or may be formed in a part of the inner flow channel located on the upstream side, particularly on the porous wall 5 defining the upstream cells 4a and the communication pores 5a therein.
The particulate oxidation catalyst forming the oxidation catalytic layer 8 includes a catalytic noble metal for burning particulates, and a composite oxide serving as a carrier for loading the catalytic noble metal.
The catalytic noble metal may be at least one selected from the group consisting of platinum (Pt), palladium (Pd) and rhodium (Rh). For example, the above composite oxide may be loaded with platinum (Pt), by adding a nitric acid solution including platinum dinitrodiamine, to the composite oxide, mixing them together, and subjecting the mixture to evaporation to dryness. For example, as to platinum (Pt), a loading amount of the catalytic noble metal to the composite oxide may be controlled by adjusting a concentration or amount of the nitric acid solution including platinum dinitrodiamine.
The composite oxide for loading the catalytic noble metal is a zirconium-based composite oxide containing zirconium as a primary component. Specifically, the zirconium-based composite oxide is adjusted to maximize a contain rate of zirconium among entire components thereof, while containing a rare-earth metal except for cerium (Ce) and yttrium (Y).

Preferably, the rare-earth metal to be contained in the zirconium-based composite oxide is at least one selected from the group consisting of scandium (Sc), lanthanum (La), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb) and lutetium (Lu), except for cerium (Ce) and yttrium (Y). Among them, more preferably, the rare-earth metal is at least one selected from the group consisting of scandium (Sc), neodymium (Nd) and ytterbium (Yb). The reason is that a capability of supplying oxygen ions ($O^{2-}$) to an outermost surface of the composite oxide is enhanced by using the rare-earth metal selected from the group consisting of scandium (Sc), neodymium (Nd) and ytterbium (Yb).

In view of a relationship with zirconium in forming a solid solution, an additive rate of the rare-earth metal is preferably set at 20 mol% or less, more preferably in the range of 3 mol% to 12 mol% as illustrated in FIG. 8. When zirconium and the rare-earth metal are formed as a solid solution, a part of the zirconium is substituted by the rare-earth metal, and thereby an oxygen vacancy is formed to produce high oxygen-ion conductivity. In particular, when the content rate of the rare-earth metal is in the range of 3 mol% to 12 mol%, the oxygen-ion conductivity is desirably enhanced.

The reason for exclusion of cerium (Ce) from the rare-earth metal to be contained in the zirconium-based composite oxide is that cerium is likely to act as an electron transfer medium and causes difficulty in effectively bringing out desirable oxygen-ion conductivity.

In this embodiment, it is particularly worth noting that the zirconium-based composite oxide has a crystallite diameter of 13 nm to 40 nm.

A production process for the oxidation catalytic layer 8 comprises the step of coprecipitating metal components to obtain a precursor to the oxidation catalytic layer 8 (in this specification, referred to as "coprecipitated precursor"), the step of subjecting the obtained coprecipitated precursor to filtering, rinsing with water and drying, the step of calcinating the dried precursor to obtain a burnt product, the step of loading the obtained burnt product with the above catalytic noble metal to obtain a catalytic noble metal-loaded material, the step of adding water and binder to the catalytic noble metal-loaded material to obtain a slurry, and the step of coating the filter body 6 with the slurry and calcinating the filter body 6 with the slurry.

In this embodiment, it is particularly worth noting that, in the step of obtaining a calcinated product from the coprecipitated precursor, the coprecipitated precursor is calcinated at a temperature ranging from 700°C to 1200°C.

This temperature range for calcinating the coprecipitated precursor was determined based on the research findings of the inventors. The coprecipitated precursor subjected to calcinating in this temperature range can be formed as a composite oxide having the metal components bonded together at an atomic level (in the form of a solid solution) while allowing a crystallite diameter of the composite oxide to fall within the range of 13 nm to 40 nm. This makes it possible to form an oxidation catalytic layer 8 excellent in light-off performance, high-temperature conversion performance and carbon burning performance, as shown in the after-mentioned test result. Further, in a catalytic material produced from the coprecipitated precursor which contains zirconium as a primary component and the above rare-earth metal, it is expected that crystal phase transformation in the composite oxide is suppressed based on formation of a solid solution of the zirconium and the rare-earth metal, as compared with a catalytic material consisting only of a zirconium oxide ($ZrO_2$), to allow the composite oxide to be maintained in a stable state.

Dimensions, such as thickness, of the oxidation catalytic layer 8 can be controlled by adjusting a viscosity and/or concentration of the slurry. If a composite oxide (e.g. alumina) other than the zirconium-based composite oxide is additionally contained in the particulate oxidation catalyst, each of the composite oxides is preferably loaded with a catalytic noble metal.

The zirconium-based composite oxide formed in the above manner has oxygen-ion conduction properties. A mechanism for oxidation of particulates by the particulate oxidation catalyst using the composite oxide having oxygen-ion conduction properties is assumed as follows.

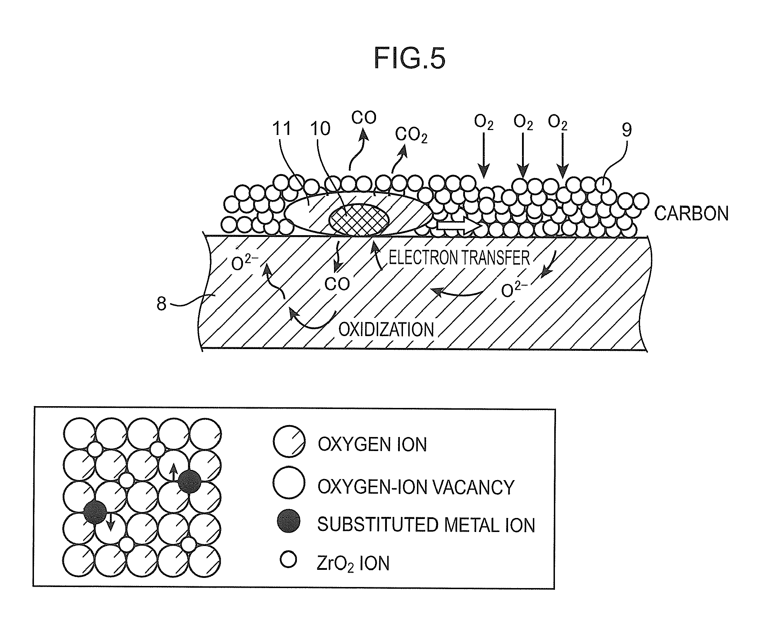

FIG. 4 is an enlarged sectional view showing the porous wall 5, and FIG. 5 is an explanatory diagram of the mechanism for oxidation of particulates.

Particulates in exhaust gas discharged from the diesel engine body are trapped by the DPF 3, and accumulated on the oxidation catalytic layer 8. Carbon 9 as a primary component of the particulates has a porous matrix and a property of absorbing oxygen. Thus, when the carbon 9 is accumulated on the oxidation catalytic layer 8, absorption/desorption of oxygen occurs in a surface region of the oxidation catalytic layer 8 with the accumulated carbon 9, and an oxygen concentration therein is lowered to cause a microscopic difference (rich/lean) in oxygen concentration relative to other region.

In response to lowering of an oxygen concentration in a certain region of the surface of the oxidation catalytic layer 8, oxygen ions ($O^{2-}$) is transferred from an inside region of the oxidation catalytic layer 8 having a relatively high oxygen concentration, to the surface region having the lowered oxygen concentration. The oxygen ions ($O^{2-}$) reaching the surface of the oxidation catalytic layer 8 become active oxygen, and thereby a region susceptible to an oxidation reaction of the carbon is locally formed in the surface of the oxidation catalytic layer 8.

Then, an oxidation reaction of the carbon 9 is initiated at a site having optimal reaction conditions. In response to initiation of the oxidation reaction, a flame kernel 10 is generated to cause a deficiency of oxygen therearound, and thereby an oxygen-deficient space 11 is formed. Generally, in an oxygen deficient state, the oxidation reaction of the carbon 9 will deteriorate to weaken and finally extinguish the flame kernel 10. Differently, in the DPF 3 according to this embodiment, the particulate oxidation catalyst forming the oxidation catalytic layer 8 contains the composite oxide having oxygen-ion conduction properties, and the composite oxide functions to continuously supply active oxygen to the oxygen-deficient space 11, so that the oxidation reaction of the carbon 9 is accelerated to expand a burning area about the flame kernel 10.

As above, in an oxygen-excess atmosphere, a difference (rich/lean) in oxygen concentration between the oxygen-deficient space 11 and the periphery thereof occurs to cause an imbalance of electric charge between microscopic regions in the composite oxide of the oxidation catalytic layer 8, and the imbalance of electric charge in the composite oxide of the oxidation catalytic layer 8 allows oxygen ions ($O^{2-}$) to be transferred from a region having a relatively high oxygen concentration to the oxygen-deficient space 11. Then, the oxygen ions ($O^{2-}$) are released to the oxygen-deficient space 11 as active oxygen to accelerate burning/binding of the carbon 9 and the active oxygen, i.e., oxidative burning. Thus, the flame kernel 10 generated in a portion of the surface of the oxidation catalytic layer 8 is maintained without extinction, and the burning area will be expanded. This makes it possible to burn and remove the carbon 9, i.e., particulates, efficiently within a short period of time and substantially lower a burning temperature of the particulates.

As shown in FIG. 5, in the composite oxide containing the rare-earth metal, a part of the zirconium is substituted by the rare-earth metal (indicated by the black circle). Thus, an oxygen-ion vacancy exists in the composite oxide, and oxygen ions ($O^{2-}$) are transferred through the vacancy.

In addition, the crystallite diameter of the oxidation catalytic layer 8 in this embodiment is set in the range of 13 nm to 40 nm so as to adequately maintain a balance between the transfer of oxygen ions ($O^{2-}$) and a contact area with the carbon 9. Specifically, when a diameter of each of the crystallites forming the oxidation catalytic layer 8 is reduced, a density of boundaries between the crystallites will is increased to hinder the transfer of oxygen ions ($O^{2-}$). Thus, an excessively small crystallite diameter causes deterioration in all of light-off and high-temperature conversion performances for exhaust gas emissions, and a carbon burnup rate. Conversely, if the crystallite diameter is increased, the contact area with the carbon 9 will be relatively narrowed even though the density of boundaries will be reduced. Thus, an excessively large crystallite diameter also causes decrease in an amount of carbon 9 to be removed and deterioration in particulate conversion performance.

Further, as to a catalytic noble metal, such as Pt, to be contained in the particulate oxidation catalyst, an amount of the catalytic noble metal required for achieving a carbon burnup rate equivalent to that in the cerium-zirconium composite oxide can be reduced. This makes it possible to save an amount of catalytic noble metal to be used, and produce a diesel particulate filter at lower cost.

As described above, the DPF 3 according to this embodiment can burn particulates accumulated therein efficiently within a short period of time.

Further, in this embodiment, a crystallite diameter of the zirconium-based composite oxide is set in a specific rage of 13 nm to 40 nm. This makes it possible to adequately maintain a balance between the transfer of oxygen ions ($O^{2-}$) and the contact area with carbon 9. Specifically, if the crystallite diameter is reduced, the density of boundaries between the crystallites will be increased to hinder the transfer of oxygen ions ($O^{2-}$). Thus, an excessively small crystallite diameter causes deterioration in all of light-off and high-temperature conversion performances for exhaust gas emissions and a carbon burnup rate. Conversely, if the crystallite diameter is increased, the contact area with carbon 9 will be relatively narrowed even though the density of boundaries will be reduced. Thus, an excessively large crystallite diameter also causes decrease in an amount of carbon 9 to be removed and deterioration in particulate conversion performance. Therefore, the DPF 3 according to this embodiment has a significant advantage of being able to increase a carbon burnup rate and enhance both light-off and high-temperature conversion performances for exhaust gas emissions.

The above DPF 3 is one example of a diesel particulate filter according to the present invention, and specific features thereof may be appropriately changed without departing from spirit and scope of the present invention. For example, an oxidation catalyst for oxidizing hydrocarbon (HC), carbon monoxide (CO) and nitric monoxide (NO) may be provided on an upstream side of the DPF 3 (in an exhaust gas flow direction). In this case, $NO_2$ from the oxidation catalyst can facilitate burning of particulates.

[EXAMPLE]

The present invention will be more specifically described based on the following examples.

Table 1 shows respective test results of Inventive Examples 1 to 4 and Comparative Examples 1 and 2 for each of three types of composite oxides No. 1 to No. 3.

Table 1

| Composite Oxide No. | | Calcinating Temperature (°C) | Crystallite Diameter (nm) | Particle Diameter D50 (μm) |
|---|---|---|---|---|
| 1 | Comparative Example 1 | 500 | 11.4 | 0.64 |
| | Inventive Example 1 | 700 | 13.0 | 0.55 |
| | Inventive Example 2 | 800 | 13.9 | 0.45 |
| | Inventive Example 3 | 1000 | 18.5 | 0.45 |
| | Inventive Example 4 | 1200 | 39.0 | 0.28 |
| | Comparative Example 2 | 1300 | 47.6 | No fine powder could be obtained due to partial sintering |
| 2 | Comparative Example 1 | 500 | 11.0 | 0.70 |
| | Inventive Example 1 | 700 | 13.2 | 0.58 |
| | Inventive Example 2 | 800 | 14.0 | 0.50 |
| | Inventive Example 3 | 1000 | 19.2 | 0.48 |
| | Inventive Example 4 | 1200 | 40.0 | 0.30 |
| | Comparative Example 2 | 1300 | 48.5 | No fine powder could be obtained due to partial sintering |
| 3 | Comparative Example 1 | 500 | 11.5 | 0.68 |
| | Inventive Example 1 | 700 | 13.1 | 0.56 |
| | Inventive Example 2 | 800 | 13.7 | 0.49 |
| | Inventive Example 3 | 1000 | 18.8 | 0.42 |
| | Inventive Example 4 | 1200 | 38.0 | 0.28 |
| | Comparative Example 2 | 1300 | 47.6 | No fine powder could be obtained due to partial sintering |

| Composite Oxide No. | Oxygen-Ion Conductivity σ (S/m) | T50 | | C300 | | Carbon Burning Rate (g/h) |
|---|---|---|---|---|---|---|
| | | HC | CO | HC | CO | |

| | | | | | | | |
|---|---|---|---|---|---|---|---|
| 1 | Comparative Example 1 | $1.02 \times 10^{-5}$ | 293.0 | 275.0 | 95.0 | 70.0 | 0.69 |
| | Inventive Example 1 | $1.45 \times 10^{-5}$ | 261.0 | 255.0 | 96.0 | 98.0 | 0.80 |
| | Inventive Example 2 | $1.51 \times 10^{-5}$ | 255.0 | 244.0 | 96.5 | 98.5 | 0.84 |
| | Inventive Example 3 | $1.77 \times 10^{-5}$ | 250.0 | 240.0 | 97.0 | 99.0 | 0.89 |
| | Inventive Example 4 | $1.20 \times 10^{-5}$ | 247.0 | 238.0 | 97.0 | 99.0 | 0.90 |
| | Comparative Example 2 | No fine powder could be obtained due to partial sintering | | | | | |
| 2 | Comparative Example 1 | $7.55 \times 10^{-5}$ | 282.0 | 273.0 | 92.8 | 98.9 | 0.73 |
| | Inventive Example 1 | $8.10 \times 10^{-5}$ | 260.0 | 252.0 | 96.0 | 98.0 | 0.80 |
| | Inventive Example 2 | $8.90 \times 10^{-5}$ | 253.0 | 247.0 | 97.0 | 99.0 | 0.84 |
| | Inventive Example 3 | $9.80 \times 10^{-5}$ | 251.0 | 242.0 | 97.0 | 99.0 | 0.90 |
| | Inventive Example 4 | $7.90 \times 10^{-5}$ | 250.0 | 240.0 | 97.0 | 99.0 | 0.90 |
| | Comparative Example 2 | No fine powder could be obtained due to partial sintering | | | | | |
| 3 | Comparative Example | $3.60 \times 10^{-4}$ | 284.0 | 271.0 | 90.1 | 98.3 | 0.73 |
| | Inventive Example 1 | $4.20 \times 10^{-4}$ | 262.0 | 255.0 | 94.0 | 99.0 | 0.82 |
| | Inventive Example 2 | $4.80 \times 10^{-4}$ | 255.0 | 246.0 | 96.0 | 99.0 | 0.86 |
| | Inventive Example 3 | $5.20 \times 10^{-4}$ | 253.0 | 244.0 | 97.0 | 99.0 | 0.92 |
| | Inventive Example 4 | $4.05 \times 10^{-4}$ | 250.0 | 241.0 | 97.0 | 99.0 | 0.92 |
| | Comparative Example 2 | No fine powder could be obtained due to partial sintering | | | | | |

No. 1: $ZrO_2$-12 mol% $Nd_2O_3$
No. 2: $ZrO_2$-12 mol% $Yb_2O_3$
No. 3: $ZrO_2$-12 mol% $Sc_2O_3$

[Preparation of Sample]

A part of a silicon-carbide diesel particulate filter support with a cell structure having a cell wall thickness of 12 mil ($3.0 \times 10^{-4}$m) and a cell density of 300 cpsi ($3.1 \times 10^{-6}$cell/$m^2$) was cut out in a cylindrical shape by an apparent volume of 25 cc, and used as a diesel particulate filter support (filter body 6).

(Preparation of Oxidation Catalytic layer 8)

Three types of zirconium-based composite oxides (No. 1 to No. 3 shown in Table 1) were prepared as a catalytic material for forming the oxidation catalytic layer 8. Then, for each of the zirconium-based composite oxides No. 1 to No. 3, four types of Inventive Examples 1 to 4 different in a calcinating temperature of a coprecipitated precursor (total twelve types) and two types of Comparative Examples 1 and 2 different in a calcinating temperature of a coprecipitated precursor (total six types) were prepared. Inventive Examples 1 to 4 are samples prepared by calcinating each coprecipitated precursor to the corresponding composite oxides No. 1 to No. 3 at 700°C, 800°C, 1000°C and 1200°C, respectively. Comparative Example 1 is a sample prepared by calcinating each coprecipitated precursor at 500°C which is lower than the calcinating temperatures of Inventive Examples 1 to 4, and Comparative Example 2 is a sample prepared by calcinating each coprecipitated precursor at 1300°C which is higher than the calcinating temperatures of Inventive Examples 1 to 4.

(1) Formation of Coprecipitated Precursor

For preparing a coprecipitated precursor for each sample, three types of nitrate salts each containing zirconium as a primary component and a different one of three types of rare-earth metals were prepared. Neodymium (Nd), ytterbium (Yb) and scandium (Sc) were used as the rare-earth metals. Each of the rare-earth metals was added to be contained in a final product in an amount of 12 mol%.

Each of the prepared nitrate salts was mixed and dissolved with/in ion-exchanged water, and each of the aqueous nitrate salt solutions was subjected to coprecipitation while dropping ammonia thereinto. Three types of resulting coprecipitated precursors correspond, respectively, to No. 1 to No. 3 shown in Table 1.

(2) Calcinating of Coprecipitated Precursor

Each of the coprecipitated precursors was subjected to filtering, rinsing with water and drying, and then the dried precursors were calcinated at different temperatures to obtain three types of zirconium-based composite oxides as calcinated products, i.e., $ZrO_2$-12 mol% $Nd_2O_3$ (No. 1), $ZrO_2$-12 mol% $Yb_2O_3$ (No. 2) and $ZrO_2$-12 mol% $Sc_2O_3$ (No. 3). In this process, for each of the coprecipitated precursors, Inventive Examples 1 to 4 were calcinated, respectively, at 700°C, 800°C, 1000°C and 1200°C, and Comparative Examples 1 and 2 were calcinated, respectively, at 500°C and 1300°C. Each of the obtained calcinated products was powdered.

(3) Formation of Catalytic Noble Metal-Loaded Material

Each of the three types of formed zirconium-based composite oxide powders was loaded with platinum (Pt) as a catalytic noble metal. A loading amount of platinum was set at 0.5 g/L with respect to 50g/L of zirconium-based composite oxide (50 g per liter of the DPF 3).

Specifically, a nitric acid solution including platinum dinitrodiamine was added and mixed to/with each of the composite oxide powders consisting of $ZrO_2$-12 mol% $Nd_2O_3$ (No. 1), $ZrO_2$-12 mol% $Yb_2O_3$ (No. 2) and $ZrO_2$-12 mol% $Sc_2O_3$ (No. 3), and each of the obtained mixtures was subjected to evaporation to dryness to load each of the zirconium-based composite oxides with Pt. Then, after drying, the obtained composite oxide was crushed and calcinated in an atmosphere at 500 °C for 2 hours to obtain a Pt-loaded zirconium-based composite oxide powder.

(4) Formation of Slurry

Then, the Pt-loaded composite oxide powder was mixed with water and binder to form a slurry. The filter body 6 was plugged by the plugging member 15, and then subjected to a wash-coating process which comprises sucking the slurry into the filter body 6, air-blowing the filter body 6 to remove an excess slurry therefrom, drying the filter body 6, calcinating the dried filter body 6 in an atmosphere at 500°C using an electric firing furnace. In this manner, as shown in Table 1, four types of zirconium-based composite oxide samples [Inventive Examples 1 to 4 (total twelve types)] and two types of Comparative Examples 1 and 2 (total six types) each having the oxidation catalytic layer 8 formed over the entire area of an inner flow channel of the filter body 6 were obtained.

Then, an experimental test for evaluating a light-off performance and a high-temperature conversion performance for exhaust gas emissions while supplying model-gas, and an experimental test for measuring a carbon burnup rate of accumulating carbon black as simulated particulates, in an atmosphere having a temperature of 590°C were carried out.

The following description will be made about a method for measuring each of the obtained samples, test conditions, and a measurement result.

[Crystallite Diameter]

A crystallite diameter was measured as follows. Each of the prepared samples was taken out by the same amount, and powdered. Then, the powdered sample was subjected to an X-ray diffraction (XRD) analysis using a small-angle X-ray scattering measuring apparatus (produced by Rigaku Corp.) under the following conditions: X-ray source; CuKα, X-ray tube voltage; 50 KV, X-ray tube current; 240 mA and 2θ range; 20° to 90°. Based on 1st to 3rd peaks originated from a given oxide, in an obtained X-ray diffraction pattern, an average crystallite diameter was calculated using the following Scherrer formula:

$$D = \frac{K \times \lambda}{\beta \cos\theta} \qquad\qquad (1)$$

, wherein

> D: average crystallite diameter (Å),
> K: constant (0.9),
> $\lambda$: measurement X-ray wavelength (1.541Å),
> $\beta$: spread of diffraction line depending on crystallite size (radian), and
> $\theta$: Bragg angle of diffraction line.

The result is shown in Table 1.

[Average Particle Diameter D50]

Each of the samples was mixed with ion-exchanged water, and dispersed therein for 10 minutes using a supersonic vibrator. An obtained mixed solution was put in a laser diffraction-type particle-size distribution measuring apparatus to check a particle-size distribution. Based on a measured particle-size distribution, the number of particles was integrated with respect to each particle diameter to calculate a crystallite diameter having a cumulative distribution rate of 50% (average particle diameter D50).

[Oxygen-Ion Conductivity]

(Method of Fabricating Sample)

Each sample of the zirconium-based composite oxides No. 1 to No. 3 (Inventive Examples 1 to 4 and Comparative Examples 1 and 2; this is also applied to the following description) was fabricated by filling a mold for forming a rectangular parallelepiped-shaped body of 5 mm length $\times$ 30 mm width $\times$ 1 mm thickness, with a catalytic material powder corresponding to each of the composite oxides No. 1 to No. 3, and applying a load of $4.9 \times 10^4$ N onto the surface of 5 mm length $\times$ 30 mm width to form a parallelepiped-shaped molded body.

Then, platinum electrode wires were connected, respectively, to opposite end surfaces in a direction of the 30 mm width, and two positions where the 30 mm width is divided equally into three, and platinum paste was applied to the connections to ensure electrical conduction between the electrode wires and the molded body. Then, the molded body was subjected to a heat treatment at 800°C for 5 minutes to bond the connections (as long as the heat treatment is performed for 5 minutes, there is almost no impact on physical properties of the power even if a calcinating temperature is 800°C).

(Method of Measuring Sample)

Each of the samples was measured by a DC four-terminal method. Specifically, the electrode wires connected to the end surfaces in the 30 mm width direction are connected, respectively, to a low voltage source and an ammeter, and the electrode wires connected to the two positions where the 30 mm width is divided equally into three were connected to a multimeter. Then, the sample was set in an atmospheric electric firing furnace at 590°C, and a current value and a voltage value were measured at a time when a voltage of 0.5 V to 1.5V is applied from the low voltage source to the sample. Based on the measured values, a specific resistance value was calculated, and used as an oxygen-ion conductivity.

[T50 Light-Off Temperature/C300 High-Temperature Conversion Efficiency]

An experimental test for checking an influence of changes in the crystallite diameter of each of the zirconium-based composite oxides on a light-off performance and a high-temperature conversion performance will be described below.

Each of the samples was subjected to aging in an atmospheric pressure at a temperature of 800°C for a hold time of 24 hours. After the aging, the sample was set in a model-gas flow-type catalyst evaluation apparatus designed to supply simulated exhaust gas therethrough. Then, the light-off performance and the high-temperature conversion performance were evaluated while heating the sample from 100°C up to 400°C at a heating rate of 30°C/min, and allowing the simulated exhaust gas set to the following conditions: HC = 200 ppmC, CO = 400 ppm, NO = 500 ppm, $O_2$ = 10%, $CO_2$ = 4.5%, $H_2O$ = 10% and $N_2$ = Balance, to flow at a space velocity of 50000/h and to be heated from 100°C up to 400°C at a heating rate of 30°C/min.

The light-off performance was evaluated based on a T50 light-off temperature which is a temperature (light-off temperature) of the simulated exhaust gas at an inlet of the sample set in the model-gas flow-type catalyst evaluation apparatus, at a time when a concentration of each component (emission) [hydrocarbon (HC), carbon monoxide (CO)] of the simulated exhaust gas detected on a downstream side of the sample is reduced to half of a concentration of the corresponding emission of the simulated exhaust gas supplied from an upstream side of the sample(i.e., when a conversion efficiency reaches 50%).

The high-temperature conversion performance was based on a C300 high-temperature conversion efficiency which is a reduction rate of a concentration of each component (emission) [hydrocarbon (HC), carbon monoxide (CO)] on the downstream side relative to a concentration of the corresponding emission detected on the upstream side, at a time when a temperature of the sample is 300°C which is a typical catalyst temperature during normal engine operation.

As seen in Table 1, in each of Inventive Examples 1 to 4 having a crystallite diameter falling within the range of 13 nm to 40 nm, the T50 light-off temperature for hydrocarbon (HC) is in the range of 247°C to 262°C, and the T50 light-off temperature for carbon monoxide (CO) is in the range of 238°C to 255°C.

Further, in each of Inventive Examples 1 to 4, the C300 high-temperature conversion efficiency of hydrocarbon (HC) is in the range of 94.0% to 97.0%, and the C300 high-temperature conversion efficiency of carbon monoxide (CO) is in the range of 98.0% to 99.0%.

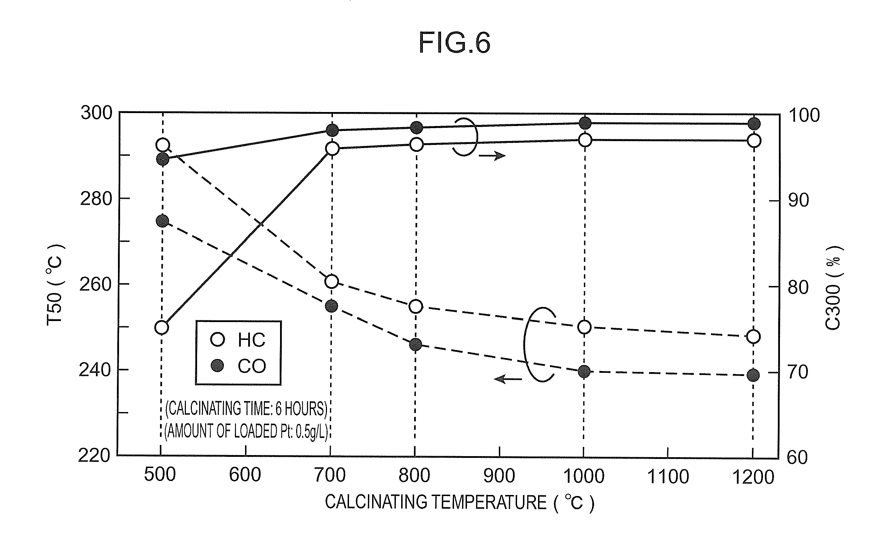

FIG. 6 is a graph showing data on a relationship of the calcinating temperature of the coprecipitated precursor, the T50 light-off temperature, and the C300 high-temperature conversion efficiency, which has been obtained from Inventive Example 1 of the zirconium-based composite oxide No. 1. In FIG. 6, the measurement result of the T50 light-off temperature is indicated by a dashed line, and the measurement result of the C300 high-temperature conversion efficiency is indicated by a solid line.

As seen in the graph of FIG. 6, in each of the T50 light-off temperature and the C300 high-temperature conversion efficiency, a sample prepared by the coprecipitated precursor at a temperature of 700°C or more (equivalent to Inventive Examples 1 to 4) exhibits drastically enhanced performance as compared with a sample prepared by the coprecipitated precursor at a temperature of 500°C (equivalent to Comparative Example 1).

However, if the calcinating temperature of the coprecipitated precursor exceeds 1200°C, the crystallite diameter will exceed 40 nm to cause partial sintering which precludes a fine powder from being obtained.

From the above results, it was found that a desirable calcinating temperature of the coprecipitated precursor is in the range of 700°C to 1200°C.

[Carbon Burning Rate]

Each of the samples prepared as described above was subjected to aging in an atmospheric pressure at a temperature of 800°C for a hold time of 24 hours. Then, a carbon black powder was accumulated on the sample as substitute for particulates, and the sample was heated while supplying the simulated exhaust gas. Under these conditions, a carbon burnup rate was evaluated based on respective concentrations of carbon dioxide ($CO_2$) and carbon monoxide (CO) to be discharged as the result of burning of carbon in the sample along with heating of the sample. For accumulating the carbon black powder on the sample, 10 cc of ion-exchanged water was added to about 10g/L of carbon black powder, and the solution was stirred for 5 minutes using a stirrer to allow the carbon black powder to be sufficiently dispersed in the solution. Then, an upstream end of the filter body 6, i.e., the sample, is immersed in the solution the solution, and simultaneously the solution was sucked from the other end of the filter body 6 on the opposite side of the immersed end, using an aspirator. Water content unremovable by the section was removed from the immersed end by air-blowing, and then the filter body 6 was dried at a temperature of 150°C for 2 hours.

The sample was set in the model-gas flow-type catalyst evaluation apparatus, and respective concentrations of carbon monoxide (CO) and carbon dioxide ($CO_2$) at a position just after an outlet of the sample were measured while heating the sample from 100°C up to 600°C at a heating rate of 15°C/min, and allowing simulated exhaust gas which contains each of oxygen gas and water vapor in an amount of 10 volume% with respect to a total volume of the gas, and 500 ppm of nitrogen monoxide, with the remainder being nitrogen gas, to flow at a space velocity of 80000/h. Based on the measured concentrations of carbon monoxide (CO) and carbon dioxide ($CO_2$), a carbon burnup rate was calculated according to the following formula. This carbon burnup rate represents an amount of carbon to be burnt in the support (DPF 3) of the sample.

Carbon burnup rate (g/h)

$$= \left\{ gas\ flow\ rate\ (L/h) \times \frac{(CO + CO_2)\ concentration\ (ppm)}{1 \times 10^6} \right\} \times 12/22.4 \qquad (2)$$

As seen in Table 1, it was verified that the carbon burnup rate is also significantly enhanced (in the range of 0.80 g/h to 0.92 g/h) as compared with the measurement result (0.69 g/h, 0.7 g/h) of Comparative Example 1.

The biggest factor allowing Inventive Examples 1 to 4 to provide such an enhanced carbon burnup rate as compared with Comparative Example 1 would be in the point that the crystallite diameter of the zirconium-based composite oxide contained in the particulate oxidation catalyst in each of Inventive Examples 1 to 4 is in the range of 13 nm to 40 nm. Specifically, in the zirconium-based composite oxide partially substituted by a trivalent metal or a divalent metal, the substitution of trivalent metal or divalent metal occurs in a crystal lattice of a tetravalent metal atom. Thus, an oxygen deficient site (oxygen-ion vacancy) is formed as shown in FIG. 5, and oxygen ions ($O^{2-}$) would be conducted through the oxygen deficient site. Further, it is assumed that the crystallite diameter of the zirconium-based composite oxide set in the range of 13 nm to 40 nm makes it possible to significantly stably maintain a balance between the transfer of oxygen ions ($O^{2-}$) and the contact area with carbon 9 so as to allow the transfer of oxygen ions ($O^{2-}$) to be accelerated while ensuring the contact with the carbon 9 to be subjected to an oxidation reaction.

Further, in view of the reference examples illustrated in FIG. 8, it is believed that an increase in the content of rare-earth metal or alkaline earth metal to be mixed in the zirconium-based composite oxide allows the oxygen-ion conductivity to be increased so as to provide enhanced carbon burnup rate. As to Comparative example 2, no data could be obtained due to occurrence of partial sintering.

[Relationship between Calcinating Temperature and Crystallite Diameter]

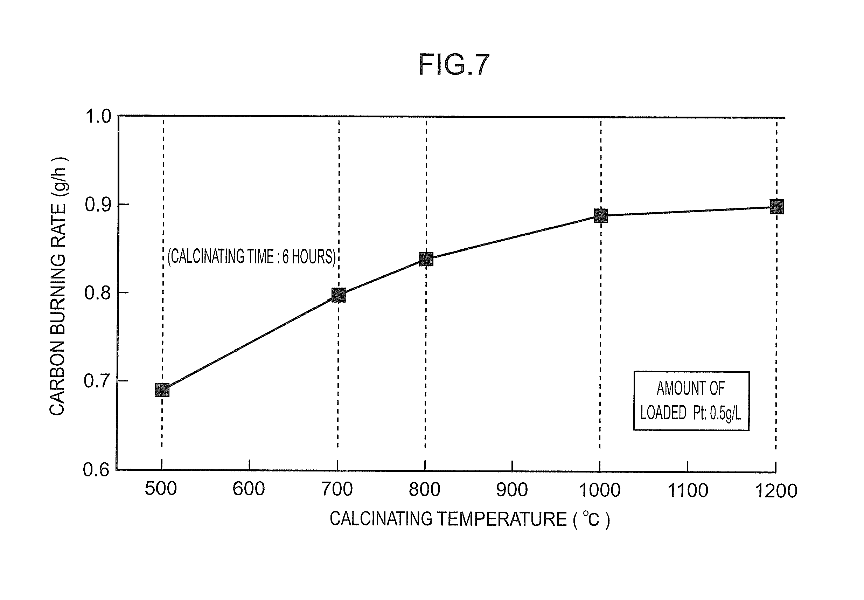

FIG. 7 is a graph showing a relationship between the calcinating temperature of the coprecipitated precursor and the carbon burnup rate.

As seen in Table 1 and FIG. 6, when the calcinating temperature of the coprecipitated precursor is in the range of 700°C to 1200°C, the crystallite diameters of Inventive Examples 1 to 4 fall within the range of 12 nm to 40 nm, irrespective of the composite oxides No. 1 to No. 3. From this result, it was proven that a desirable calcinating temperature of the coprecipitated precursor is in the range of 700°C to 1200°C.

[Relationship between Calcinating Time and Crystallite Diameter]

An influence of the calcinating time of the coprecipitated precursor on the crystallite diameter was checked for a product obtained by calcinating the composite oxide No. 1 at 1000°C.

Table 2 shows the result.

Table 2

| Calcinating Time (hour) | 2 | 6 | 24 | 48 |
|---|---|---|---|---|
| Crystallite Diameter (nm) | 18.2 | 18.5 | 18.6 | 18.7 |

As seen in Table 2, the calcinating time of the coprecipitated precursor has almost no impact on the crystallite diameter. Thus, in the implement of the present invention, the coprecipitated precursor may be subjected to calcinating for a practical calcinating time appropriately set in the range of 2 to 12 hours.

As mentioned above, the features of present invention are as follows. According to a first aspect of the present invention, there is a catalytic material for removing diesel particulates. The catalytic material comprises a composite oxide which contains zirconium as a primary component and a rare-earth metal except for cerium and yttrium, and has a crystallite diameter of 13 nm to 40 nm.

The above catalytic material of the present invention allows particulates accumulated in catalytic material (catalytic layer) to be burnt efficiently within a short period of time. This would be achieved by the following mechanism. A zirconium-based composite oxide has oxygen-ion conduction properties. Thus, when particulates attach on a surface of the catalytic material to locally form a specific site having a relatively low oxygen concentration in the surface, oxygen ions ($O^{2-}$) are transferred from other site having a relatively high oxygen concentration to the specific site through the composite oxide, and sequentially released from the composite oxide as active oxygen. This active oxygen reacts with particulates consisting primarily of carbon to oxidize the particulates and generate a flame kernel. While the generation of the flame kernel leads to a deficiency of oxygen therearound, oxygen ions ($O^{2-}$) are sequentially transferred through the composite oxide as described above, and active oxygen is continuously is supplied to the oxygen-deficient site to allow a burning area to expand peripherally about the flame kernel. In this manner, a flame kernel generated at a certain site is maintained to expand a burning area, so that particulates can be efficiently subjected to oxidative burning even at relatively low temperatures. Thus, in a process of increasing a temperature of exhaust gas to be passed through a diesel particulate filter, by a post fuel-injection control or the like, so as to regenerate the diesel particulate filter (burning and removal of particulates), a fuel injection amount for the post fuel-injection control can be reduced while allowing the regeneration of the filter to be performed efficiently within a short period of time, to achieve enhanced fuel economy. Furthermore, in the present invention, a crystallite diameter of the composite oxide is set in a specific rage of 13 nm to 40 nm. This makes it possible to adequately maintain a balance between the transfer of oxygen ions ($O^{2-}$) and a contact area with particulates. Specifically, an oxide or composite oxide for use in a catalyst or the like generally exists in the form of a secondary particle which consists of an aggregate of a plurality of crystallites. Given that a particle diameter of this secondary particle is constant, the number of boundaries between the crystallites in contact with each other is increased as each diameter of the crystallites becomes smaller. The increase in the number of boundaries means that the oxygen ions ($O^{2-}$) have to pass through a greater number of boundaries, to cause difficulty in transferring the oxygen ions ($O^{2-}$). Therefore, if the crystallite diameter is excessively small, all of light-off and high-temperature conversion performances for exhaust gas emissions and a carbon burnup rate will deteriorate. Conversely, if the crystallite diameter is increased, the contact area with particulates will be relatively narrowed even though the number of boundaries between the crystallites in contact with each other will be reduced. Thus, an excessively large crystallite diameter also causes decrease in an amount of particulates to be removed and deterioration in particulate conversion performance. In the present invention, the reason for exclusion of cerium from the rare-earth metal of the zirconium-based composite oxide is that a cerium-zirconium composite oxide primarily acts as an oxygen absorbing/releasing material and has low oxygen-ion conductivity. Further, the reason for exclusion of yttrium is that the applicant of this application previously filed a patent application (Japanese Patent Application Serial No. 2004-83078) concerning a particulate oxidation catalyst comprising a zirconium-yttrium composite oxide ($ZrO_2$-$Y_2O_3$). Through subsequent researches, the present invention was made based on a discovery of a zirconium-based composite oxide capable of obtaining further enhanced light-off and high-temperature conversion performances for exhaust gas emissions and a higher carbon burnup rate than those in zirconium-yttrium composite oxide.

In a catalytic material according to a preferred embodiment of the present invention, a content rate of the rare-earth metal contained in the composite oxide is set in the range of 3 mol% to 12 mol%.

In a catalytic material according to a more preferred embodiment of the present invention, the rare-earth metal is at least one selected from the group consisting of scandium, neodymium and ytterbium.

According to a second aspect of the present invention, there is provided a method for production of the catalytic material set forth in the first aspect of the present invention. The method comprises the steps of obtaining a coprecipitated precursor which contains zirconium as a primary component and a rare-earth metal except for cerium and yttrium, and calcinating the coprecipitated precursor in an atmosphere at a temperature ranging from 700°C to 1200°C.

As used in this specification, the term "coprecipitated precursor" means a hydroxide obtained by coprecipitating metals constituting the catalytic material, to serve as a precursor to the catalytic material. In the above method of the present invention, through calcinating of the coprecipitated precursor, a composite oxide having metal components bonded together at an atomic level (in the form of a solid solution) is formed as a calcinated product. Then, based on this calcinated product, the catalytic material having the above crystallite diameter can be produced using a practical facility. In the catalytic material produced from the coprecipitated precursor which contains zirconium as a primary component and the given rare-earth metal, it is expected that crystal phase transformation in the composite oxide is suppressed based on formation of a solid solution of the zirconium and the rare-earth metal, as compared with a catalytic material consisting only of a zirconium oxide ($ZrO_2$), to allow the composite oxide to be maintained in a stable state. As is evidenced from an after-mentioned test result, a calcinating time for obtaining the crystallite diameter of 13 nm to 40 nm may be set in the range of 2 to 48 hours without any adverse effect thereon. Thus, the calcinating time can be appropriately selected from a relatively wide range depending on specifications of an intended product and a production facility, a production plan and others.

According to a third aspect of the present invention, there is provides a diesel particulate filter adapted to be disposed in an exhaust passage of a diesel engine. The diesel particulate filter comprises a catalytic layer formed to define a contact surface with exhaust gas passing through the exhaust passage. The catalytic layer is made of a catalytic material including a composite oxide which contains zirconium as a primary component and a rare-earth metal except for cerium and yttrium, and has a crystallite diameter of 13 nm to 40 nm.

In a diesel particulate filter according to a preferred embodiment of the present invention, a content rate of the rare-earth metal contained in the composite oxide is set in the range of 3 mol% to 12 mol%.

In a diesel particulate filter according to a more preferred embodiment of the present invention, the rare-earth metal is at least one selected from the group consisting of scandium, neodymium and ytterbium.

The catalytic material or the diesel particulate filter of the present invention provides a significant advantage of being able to burn particulates accumulated in the catalytic material (catalytic layer) efficiently within a short period of time so as to enhance both light-off and high-temperature conversion performances for exhaust gas emissions. Further, the production method of the present invention makes it possible to optimally produce the catalytic material.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

**Claims**

1. A catalytic material for removing diesel particulates, comprising a composite oxide which contains zirconium as a primary component and a rare-earth metal except for cerium and yttrium, said composite oxide having a crystallite diameter of 13 nm to 40 nm.

2. The catalytic material according to claim 1, wherein a content rate of said rare-earth metal contained in said composite oxide is set in the range of 3 mol% to 12 mol%.

3. The catalytic material as defined in claim 1 or 2, wherein said rare-earth metal is at least one selected from the group consisting of scandium, neodymium and ytterbium.

4. A method for production of the catalytic material according to claim 1, comprising the steps of:

   obtaining a coprecipitated precursor which contains zirconium as a primary component and a rare-earth metal except for cerium and yttrium; and
   calcinating said coprecipitated precursor in an atmosphere at a temperature ranging from 700°C to 1200°C.

5. A diesel particulate filter adapted to be disposed in an exhaust passage of a diesel engine, comprising a catalytic layer formed to define a contact surface with exhaust gas passing through said exhaust passage, said catalytic layer being made of a catalytic material including a composite oxide which contains zirconium as a primary component and a rare-earth metal except for cerium and yttrium, said composite oxide having a crystallite diameter of 13 nm to 40 nm.

6. The diesel particulate filter according to claim 5, wherein a content rate of said rare-earth metal contained in said composite oxide is set in the range of 3 mol% to 12 mol%.

7. The diesel particulate filter according to claim 5 or 6, wherein said rare-earth metal is at least one selected from the group consisting of scandium, neodymium and ytterbium.

# FIG.1

## FIG.2

## FIG.3

# FIG.4

FIG.5

## FIG.6

EP 1 818 097 A1

# FIG.7

EP 1 818 097 A1

FIG.8

**European Patent Office**

**EUROPEAN SEARCH REPORT**

Application Number

EP 07 10 1943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KOTESWARA RAO K ET AL: "Preparation and characterization of bulk and nano particles of La2Zr2O7 and Nd2Zr2O7 by sol-gel method" MATERIALS LETTERS, NORTH HOLLAND PUBLISHING COMPANY. AMSTERDAM, NL, vol. 54, no. 2-3, May 2002 (2002-05), pages 205-210, XP004353022 ISSN: 0167-577X page 208: reference 12: Nd2Zr2O7 * paragraphs [001.], [INTRODUCTION] * | 1-7 | INV. B01J23/10 B01J21/06 C01G25/00 F01N3/021 B01J35/00 |
| X | THANGADURAI P ET AL: "Conductivity behaviour of a cubic/tetragonal phase stabilized nanocrystalline La2O3-ZrO2" November 2004 (2004-11), JOURNAL OF PHYSICS AND CHEMISTRY OF SOLIDS, PERGAMON PRESS, LONDON, GB, PAGE(S) 1905-1912 , XP004588232 ISSN: 0022-3697 5% La2O3-ZrO2 * paragraph [2.EXPERIMENTAL]; table 1 * | 1-7 | |
| X | FU-PING WANG;YAN-JU YU;ZHAO-HUA JIANG;LIAN-CHENG ZHAOB: "Synthesis of Pb1?xEux(Zr0.52Ti0.48)O3 nanopowders by a modified sol?gel process using zirconium oxynitrate source" MATERIAL SCIENCE COMMUNICATION, vol. 77, no. 1, 2 January 2003 (2003-01-02), pages 10-13, XP002432088 * abstract * | 1-7 | TECHNICAL FIELDS SEARCHED (IPC) B01J C01G F01N |

-/--

The present search report has been drawn up for all claims

| Place of search | Date of completion of the search | Examiner |
|---|---|---|
| Munich | 4 May 2007 | Holzwarth, Arnold |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

European Patent
Office

**EUROPEAN SEARCH REPORT**

Application Number

EP 07 10 1943

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 287 527 B1 (KAWANAMI MAKOTO [JP] ET AL) 11 September 2001 (2001-09-11) * column 1, line 10 - line 32; claims 1-4; example comp.3; table 1 * * column 6, line 44 - line 53 * ----- | 1-7 | |
| A | US 5 837 642 A (TANAKA HIROHISA [JP] ET AL) 17 November 1998 (1998-11-17) * example comp.2; table 1 * * claim 1 * ----- | | |
| A | EP 1 206 965 A (TOYOTA CHUO KENKYUSHO KK [JP]) 22 May 2002 (2002-05-22) * paragraph [0027]; claims 1,13 * ----- | | |
| A | EP 1 000 653 A (ISUZU CERAMICS RES INST [JP]) 17 May 2000 (2000-05-17) * paragraph [0039]; claims 1-5,7; example 1 * ----- | | |
| A | US 6 306 794 B1 (SUZUKI TADASHI [JP] ET AL) 23 October 2001 (2001-10-23) * claims 1,2,15; examples 7,16 * ----- | | TECHNICAL FIELDS SEARCHED (IPC) |

The present search report has been drawn up for all claims

| Place of search | Date of completion of the search | Examiner |
|---|---|---|
| Munich | 4 May 2007 | Holzwarth, Arnold |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 07 10 1943

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2007

| Patent document cited in search report | | Publication date | Patent family member(s) | | Publication date |
|---|---|---|---|---|---|
| US 6287527 | B1 | 11-09-2001 | DE<br>DE | 69628206 D1<br>69628206 T2 | 18-06-2003<br>08-04-2004 |
| US 5837642 | A | 17-11-1998 | DE | 19644276 A1 | 03-07-1997 |
| EP 1206965 | A | 22-05-2002 | JP<br>US | 2002211908 A<br>2002090512 A1 | 31-07-2002<br>11-07-2002 |
| EP 1000653 | A | 17-05-2000 | JP | 2000140581 A | 23-05-2000 |
| US 6306794 | B1 | 23-10-2001 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1504815 A1
- EP 1208903 A2
- JP 2005241744 A
- JP 2004083078 A